# EUROPÄISCHE PATENTSCHRIFT

(11) **EP 3 036 461 B1**
(45) Veröffentlichungstag und Bekanntmachung des Hinweises auf die Patenterteilung: **19.07.2017**
(21) Anmeldenummer: 14745085.2
(22) Anmeldetag: 30.07.2014
(51) Int. Cl.: F16J 15/06, F16J 15/08

(54) **DICHTUNGSANORDNUNG, FLACHDICHTUNG FÜR EINE DICHTUNGSANORDNUNG SOWIE VERFAHREN ZUR MONTAGE EINER DICHTUNGSANORDNUNG**
SEALING ASSEMBLY, FLAT GASKET FOR A SEALING ASSEMBLY AND METHOD FOR MOUNTING A SEALING ASSEMBLY
SYSTÈME D'ÉTANCHÉITÉ, JOINT D'ÉTANCHÉITÉ PLAT POUR UN SYSTÈME D'ÉTANCHÉITÉ ET PROCÉDÉ DE MONTAGE D'UN SYSTÈME D'ÉTANCHÉITÉ

(30) Priorität: 20.08.2013 DE 102013013859
(43) Veröffentlichungstag der Anmeldung: 29.06.2016
(73) Patentinhaber: Audi AG, 85045 Ingolstadt (DE)
(72) Erfinder: LESKA, Wolfgang, 85080 Gaimersheim (DE)
(74) Vertreter: Lehle, Josef
(86) Internationale Anmeldenummer: PCT/EP2014/002082
(87) Internationale Veröffentlichungsnummer: WO 2015/024622

(56) Entgegenhaltungen:
- WO-A1-2009/065420
- US-A- 5 154 529
- US-A1- 2003 164 594
- US-A1- 2008 038 049
- US-B1- 6 386 593

## Beschreibung

Die Erfindung betrifft eine Dichtungsanordnung mit einem eine erste Dichtfläche aufweisenden ersten Bauteil, einem eine zweite Dichtfläche aufweisenden zweiten Bauteil sowie einer flächig zwischen der ersten Dichtfläche und der zweiten Dichtfläche angeordneten Flachdichtung, die über eine Durchgangsöffnung für ein in dem ersten Bauteil und/oder dem zweiten Bauteil wenigstens bereichsweise angeordnetes, in die Durchgangsöffnung zumindest eingreifendes drittes Bauteil verfügt. Die Erfindung betrifft weiterhin eine Flachdichtung für eine Dichtungsanordnung sowie ein Verfahren zur Montage einer Dichtungsanordnung.

Das erste Bauteil sowie das zweite Bauteil sind beispielsweise Bestandteil einer Hydraulikeinrichtung, insbesondere eines Gehäuses der Hydraulikeinrichtung. Mithilfe der Flachdichtung sollen die beiden Bauteile gegeneinander abgedichtet beziehungsweise dicht aneinander befestigt werden. Zu diesem Zweck weisen sie die erste Dichtfläche sowie die zweite Dichtfläche auf, welche vorzugsweise jeweils eben sind und insbesondere parallel zueinander angeordnet werden. Die Flachdichtung weist die Durchgangsöffnung auf, in welcher wenigstens bereichsweise das dritte Bauteil angeordnet ist. Das dritte Bauteil ragt also zumindest in die Durchgangsöffnung hinein oder durchgreift diese vollständig.

Das dritte Bauteil liegt entweder in dem ersten Bauteil oder dem zweiten Bauteil wenigstens bereichsweise vor. Falls das dritte Bauteil die Durchgangsöffnung durchgreift, kann es selbstverständlich sowohl in dem ersten Bauteil als auch in dem zweiten Bauteil jeweils wenigstens bereichsweise angeordnet sein. Das dritte Bauteil wird von der Flachdichtung wenigstens teilweise oder vollständig umgriffen. Entsprechend ist eine Abdichtung des dritten Bauteils gegenüber einer Umgebung der Dichtungsanordnung ebenfalls sichergestellt. Das dritte Bauteil liegt beispielsweise als Leitung, insbesondere als Rohrleitung, vor und ragt von dem ersten Bauteil bis in das zweite Bauteil hinein. Vorzugsweise durchgreift es dabei das erste Bauteil und/oder das zweite Bauteil vollständig.

Aus dem Stand der Technik ist beispielsweise die Druckschrift US 2002/0190479 A1 bekannt, welche eine metallische Dichtung beschreibt. Des Weiteren offenbart z.B. US 2008/0038049 A1 die Merkmale des Oberbegriffs des Anspruchs 1. Es ist nun Aufgabe der Erfindung, eine Dichtungsanordnung vorzuschlagen, welche eine vereinfachte Handhabung der Dichtungsanordnung, insbesondere eine Verringerung des für die Montage der Dichtungsanordnung notwendigen Aufwands, ermöglicht.

Dies wird erfindungsgemäß mit einer Dichtungsanordnung mit den Merkmalen des Anspruchs 1 erzielt. Dabei ist vorgesehen, dass die Flachdichtung Haltemittel zur Befestigung des dritten Bauteils aufweist, wobei die Haltemittel in einer Freigabestellung der Flachdichtung das dritte Bauteil freigeben und in einer Haltestellung bezüglich des ersten Bauteils und/oder des zweiten Bauteils zumindest in einer Richtung festsetzen. Die Flachdichtung weist also nicht lediglich eine Dichtwirkung, sondern weiterhin eine Haltefunktion auf. Entsprechend können im Idealfall separate Befestigungsmittel zur Befestigung des dritten Bauteils an dem ersten Bauteil und/oder dem zweiten Bauteil entfallen. Dies bewirkt zum einen eine Verringerung des Aufwands, welcher für die Montage der Dichtungsanordnung anfällt. Weiterhin kann die Teileanzahl der Dichtungsanordnung reduziert werden, weil die separaten Befestigungsmittel vorzugsweise vollständig entfallen können.

Erfindungsgemäß ist es von besonderer Bedeutung, dass nicht lediglich die Haltemittel an der Flachdichtung vorgesehen sind, sondern dass die Flachdichtung zusätzlich durch Verschieben auf der ersten Dichtfläche oder der zweiten Dichtfläche in unterschiedliche Stellungen gebracht werden kann. In der Freigabestellung der Flachdichtung ist das dritte Bauteil freigegeben, sodass es von der Flachdichtung beziehungsweise den Haltemitteln nicht an einer Verlagerung bezüglich des ersten Bauteils und/oder des zweiten Bauteils gehindert wird. Wird dagegen die Flachdichtung in ihre Haltestellung verlagert, so wird nachfolgend das dritte Bauteil bezüglich des ersten Bauteils und/oder des zweiten Bauteils zumindest in einer Richtung festgesetzt. Das dritte Bauteil kann dabei mittels der Haltemittel kraftschlüssig und/oder formschlüssig gehalten sein.

Bei einer Montage der Dichtungsanordnung wird also beispielsweise zunächst die Flachdichtung auf eine der Dichtflächen aufgelegt und das dritte Bauteil derart angeordnet, dass es zumindest in die Durchgangsöffnung hineinragt beziehungsweise in diese eingreift. Anschließend wird die Flachdichtung in die Haltestellung verlagert, sodass nachfolgend das dritte Bauteil festgesetzt ist. Nachfolgend wird beispielsweise das zweite Bauteil derart an dem ersten Bauteil angeordnet, dass die zweite Dichtfläche auf der der ersten Dichtfläche angeordneten Seite der Flachdichtung dichtend anliegt. Für das Befestigen des zweiten Bauteils an dem ersten Bauteil sind geeignete Mittel vorgesehen, beispielsweise wenigstens eine Schraubverbindung.

Bevorzugt ist es vorgesehen, dass nach der Montage der Dichtungsanordnung das erste Bauteil und das zweite Bauteil die Flachdichtung klemmend zwischen sich halten, sodass eine Verlagerung der Flachdichtung aus der Haltestellung heraus, insbesondere in Richtung der Freigabestellung, nicht möglich ist. Dieses Halten des dritten Bauteils erfolgt beispielsweise kraftschlüssig und/oder formschlüssig.

In einer bevorzugten Ausgestaltung der Erfindung ist vorgesehen, dass an dem ersten Bauteil, dem zweiten Bauteil oder dem dritten Bauteil ein Dichtelement, insbesondere in Dichtstopfen, vorgesehen ist, der in eine Aufnahmeöffnung des ersten Bauteils und/oder des zweiten Bauteils hineinragt und dichtend an einer Innenumfangsfläche der Aufnahmeöffnung anliegt. Das Dichtelement beziehungsweise der Dichtstopfen kann integral mit dem dritten Bauteil ausgebildet sein oder alternativ als separates Element an einem Grundkörper des dritten Bauteils angeordnet sein. Das Dichtelement ist dabei bevorzugt dem dritten Bauteil zugeordnet. Alternativ kann er jedoch auch an dem ersten Bauteil oder dem zweiten Bauteil vorliegen. Beispielsweise besteht das Dichtelement aus einem Dichtungsmaterial, besonders bevorzugt aus demselben Material wie die Flachdichtung. Insbesondere ist das Material, aus welchem das Dichtelement besteht, elastisch, sodass ein Einbringen des dritten Bauteils mitsamt dem Dichtelement in die Aufnahmeöffnung problemlos möglich ist.

Das Dichtelement beziehungsweise der Dichtstopfen ist insbesondere dann von Vorteil, wenn das dritte Bauteil in Form einer Leitung beziehungsweise einer Rohrleitung vorliegt. In diesem Fall ist bevorzugt die Aufnahmeöffnung in axialer Richtung bezüglich einer Längsmittelachse der Leitung größer als die Rohrleitung. Mithilfe des Dichtelements können beispielsweise Toleranzen, insbesondere Positionstoleranzen und/oder Winkeltoleranzen, ohne weiteres ausgeglichen werden. Von Bedeutung ist lediglich, dass das Dichtelement dichtend an dem dritten Bauteil beziehungsweise dessen Grundkörper vorliegt beziehungsweise anliegt und dass er gleichzeitig dichtend an der Innenumfangsfläche der Aufnahmeöffnung anliegt, um so eine dichte Verbindung zwischen dem dritten Bauteil und der Innenumfangsfläche zu realisieren.

Eine weitere Ausgestaltung der Erfindung sieht vor, dass das dritte Bauteil, insbesondere das Dichtelement, eine Haltekerbe aufweist, in welche die Haltemittel in der Haltestellung derart eingreifen, dass das dritte Bauteil festgesetzt ist. Entsprechend liegt eine formschlüssige Befestigung des dritten Bauteils bezüglich des ersten Bauteils und/oder des zweiten Bauteils vor. Die Haltekerbe ist vorzugsweise über den gesamten Außenumfang des dritten Bauteils beziehungsweise des Dichtelements vorgesehen, um eine aufwendige Ausrichtung der Haltekerbe bezüglich der Haltemittel während der Montage zu vermeiden. Vielmehr ist es bevorzugt ausreichend, das dritte Bauteil in der Aufnahmeöffnung derart anzuordnen, dass die axiale Position der Haltekerbe mit der axialen Position der Haltemittel übereinstimmt. Das Halten des dritten Bauteils kann insoweit unabhängig von einer Positionierung der Haltekerbe in Umfangsrichtung realisiert werden. Besonders bevorzugt ist die Haltekerbe in dem Dichtelement beziehungsweise Dichtstopfen ausgebildet. In diesem Fall ist das Dichtelement bevorzugt fest mit dem dritten Bauteil beziehungsweise dessen Grundkörper verbunden, beispielsweise kraftschlüssig, formschlüssig und/oder stoffschlüssig.

Eine Weiterbildung der Erfindung sieht vor, dass die Haltemittel als Halterand die Durchgangsöffnung wenigstens teilweise begrenzen. Die Haltemittel liegen also in Form des Rands der Durchgangsöffnung vor und bilden insoweit den Halterand. Der Halterand ist derart ausgestaltet, dass er in der Haltestellung in die Haltekerbe eingreifen kann. Insoweit weist er bevorzugt eine Dicke auf, welche der Breite der Haltekerbe entspricht. Anders ausgedrückt sind die Abmessungen des Halterands und der Haltekerbe in axialer Richtung vorzugsweise identisch. Alternativ kann selbstverständlich der Halterand kleinere Abmessungen aufweisen, solange auf diese Art und Weise die Haltefunktion des dritten Bauteils gewährleistet ist. Dabei kann auch ein Spiel mit einer bestimmten Größenordnung zugelassen sein.

Liegen die Haltemittel als Halterand vor, so ist die Durchgangsöffnung in radialer Richtung bevorzugt mindestens genauso groß wie das dritte Bauteil beziehungsweise das Dichtelement. Das bedeutet, dass das dritte Bauteil zunächst ohne weiteres durch die Durchgangsöffnung hindurchverlagert werden kann oder zumindest in die Durchgangsöffnung hineinverlagert werden kann. Anschließend wird die Flachdichtung in die Haltestellung verlagert, wobei ein Bereich des Rands der Durchgangsöffnung, welcher als Halterand bezeichnet wird, mit dem dritten Bauteil zu dessen Festsetzen in Wirkverbindung tritt, insbesondere in die Haltekerbe eingreift.

Eine besonders bevorzugte Ausgestaltung der Erfindung sieht vor, dass die Durchgangsöffnung randgeschlossen ausgestaltet ist. Die Durchgangsöffnung umgreift also nach der Montage das dritte Bauteil in Umfangsrichtung vollständig. Sie durchbricht dabei an keiner Stelle einen Rand der Flachdichtung. Erfindungsgemäß werden Befestigungsmittel zur Befestigung der Flachdichtung an dem ersten Bauteil, dem zweiten Bauteil und/oder dem dritten Bauteil vorgesehen, wobei die Flachdichtung in der Freigabestellung bezüglich des ersten Bauteils, des zweiten Bauteils und/oder des dritten Bauteils in der zumindest einen Richtung verlagerbar und in der Haltestellung festgelegt ist. Um die Montage der Dichtungsanordnung weiter zu vereinfachen, sind die Befestigungsmittel vorgesehen. Diese dienen zum Festlegen der Flachdichtung an wenigstens einem der Bauteile, bevorzugt an allen Bauteilen. Die Befestigungsmittel sind dabei derart ausgestaltet, dass dabei auch ihre Wirkung von der Stellung der Flachdichtung abhängt.

Liegt die Flachrichtung in der Freigabestellung vor, so kann sie ohne weiteres von dem ersten Bauteil, dem zweiten Bauteil beziehungsweise dem dritten Bauteil entfernt oder auf dieses aufgebracht werden. In der Haltestellung dagegen ist sie an dem ersten Bauteil, dem zweiten Bauteil und/oder dem dritten Bauteil festgelegt, lässt sich also wenigstens in der zumindest einen Richtung nicht mehr verlagern. Allenfalls ist eine Verlagerung der Flachdichtung aus der Haltestellung in Richtung der Freigabestellung möglich, insbesondere um die Flachdichtung nachfolgend von dem entsprechenden Bauteil abnehmen zu können.

Eine weitere Ausgestaltung der Erfindung sieht vor, dass die Befestigungsmittel wenigstens einen Haltevorsprung und eine mit dem Haltevorsprung in der Haltestellung zum Festlegen der Flachdichtung zusammenwirkende Halteaufnahme aufweisen. Vorzugsweise greift der Haltevorsprung zumindest in der Haltestellung in die Halteaufnahme ein, sodass mit den Befestigungsmitteln eine formschlüssige Verbindung zum Festlegen der Flachdichtung erzielt wird. Der Haltevorsprung kann von dem dritten Bauteil und die Halteaufnahme von der Durchgangsöffnung gebildet sein. In diesem Fall sind die Haltemittel teilweise mit dem dritten Bauteil integriert vorgesehen. Selbstverständlich ist jedoch auch eine separate Ausbildung der Haltemittel möglich.

Schließlich kann vorgesehen sein, dass der Haltevorsprung an dem ersten Bauteil oder dem zweiten Bauteil und die Halteaufnahme an der Flachdichtung vorliegt. Beispielsweise weist der Haltevorsprung einen Haltekopf auf, welcher auf der von dem ersten Bauteil abgewandten Seite des Haltevorsprungs an diesem vorliegt. Der Haltekopf weist dabei einen größeren Durchmesser auf als ein Haltekörper des Haltevorsprungs, über welchen der Haltekopf an dem ersten Bauteil befestigt ist. Sowohl der Haltekopf als auch der Haltekörper weisen bevorzugt einen runden Querschnitt auf. Die Halteaufnahme weist vorzugsweise eine an den Haltevorsprung angepasste Form auf. Beispielsweise besteht sie aus einem Bereich, welcher Abmessungen aufweist, die denjenigen des Haltekopfs entsprechen oder größer sind. Ein weiterer Bereich der Halteaufnahme weist Abmessungen auf, welche denjenigen des Haltekörpers entsprechen oder größer sind als diese, gleichzeitig jedoch kleiner sind als die Abmessungen des Haltekopfs.

Bei einer derartigen Ausgestaltung kann der Haltevorsprung in dem ersten Bereich ohne Weiteres in die Halteaufnahme eingebracht werden. Wird nachfolgend die Flachdichtung derart verlagert, dass der Haltevorsprung beziehungsweise der Haltekörper nunmehr in dem zweiten Bereich vorliegt, so verhindert der Haltekopf, dass der Haltevorsprung aus der Halteaufnahme herausverlagert werden kann, ohne zuvor die erste Stellung wieder herzustellen. Entsprechend wird auch die Flachdichtung an dem ersten Bauteil beziehungsweise dem zweiten Bauteil gehalten. Besonders bevorzugt ist in der Freigabestellung der Flachdichtung der Haltevorsprung in dem ersten Bereich der Halteaufnahme und in der Haltestellung in dem zweiten Bereich der Halteaufnahme angeordnet.

Die Erfindung betrifft weiterhin eine Flachdichtung für eine Dichtungsanordnung, insbesondere gemäß den vorstehenden Ausführungen. Die Flachdichtung ist zur flächigen Anordnung zwischen einem eine erste Dichtfläche aufweisenden ersten Bauteil und einem eine zweite Dichtfläche aufweisenden zweiten Bauteil vorgesehen, wobei die Flachdichtung über eine Durchgangsöffnung für ein in dem ersten Bauteil und/oder dem zweiten Bauteil wenigstens bereichsweise angeordnetes, in die Durchgangsöffnung zumindest eingreifendes drittes Bauteil verfügt.

Dabei ist vorgesehen, dass die Flachdichtung Haltemittel zur Befestigung des dritten Bauteils aufweist, wobei die Haltemittel in einer Freigabestellung der Flachdichtung das dritte Bauteil freigeben und in einer Haltestellung bezüglich des ersten Bauteils und/oder des zweiten Bauteils zumindest in einer Richtung festsetzen. Auf die Vorteile einer derartigen Ausgestaltung der Flachdichtung wurde bereits eingegangen. Die Flachdichtung sowie die Dichtungsanordnung können gemäß den vorstehenden Ausführungen weitergebildet sein, sodass insoweit auf diese verwiesen wird.

Die Erfindung betrifft weiterhin ein Verfahren zur Montage einer Dichtungsanordnung, insbesondere einer Dichtungsanordnung gemäß den vorstehenden Ausführungen. Die Dichtungsanordnung weist eine erste Dichtfläche aufweisendes erstes Bauteil, ein eine zweite Dichtfläche aufweisendes zweites Bauteil sowie eine flächig zwischen der ersten Dichtfläche und der zweiten Dichtfläche angeordnete Flachdichtung auf. Die Flachdichtung verfügt über eine Durchgangsöffnung für ein in dem ersten Bauteil und/oder dem zweiten Bauteil wenigstens bereichsweise angeordnetes, in die Durchgangsöffnung zumindest eingreifendes drittes Bauteil.

Das Verfahren zeichnet sich dadurch aus, dass die Flachdichtung während der Montage von einer Freigabestellung in eine Haltestellung verlagert wird und die Flachdichtung Haltemittel zur Befestigung des dritten Bauteils aufweist, wobei die Haltemittel in der Freigabestellung das dritte Bauteil freigeben und in der Haltestellung bezüglich des ersten Bauteils und/oder des zweiten Bauteils zumindest in einer Richtung festsetzen. Auch hinsichtlich des Verfahrens wird auf die vorstehenden Ausführungen verwiesen, welche vorteilhafte Ausgestaltungen des Verfahrens beschreiben.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Schnittdarstellung einer Dichtungsanordnung mit einem ersten Bauteil, einem zweiten Bauteil sowie einer zwischen diesen angeordneten Flachdichtung,
- Figur 2: eine Detailansicht eines Bereichs der Dichtungsanordnung,
- Figur 3: eine Darstellung eines Bereichs der Dichtungsanordnung nach einem ersten Montageschritt, und
- Figur 4: den Bereich der Dichtungsanordnung nach einem zweiten Montageschritt.

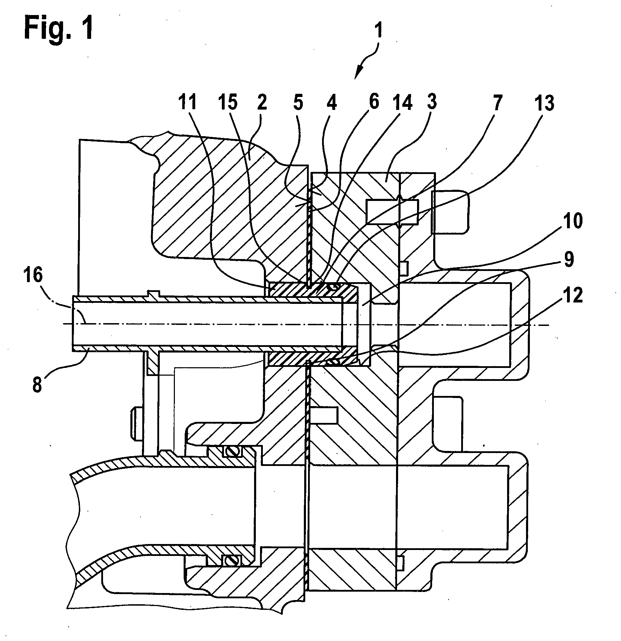

Die Figur 1 zeigt eine Dichtungsanordnung 1 mit einem ersten Bauteil 2 und einem zweiten Bauteil 3. Das erste Bauteil 2 verfügt über eine erste Dichtfläche 4, während an dem zweiten Bauteil 3 eine zweite Dichtfläche 5 vorgesehen ist. Beispielsweise sind die Bauteile 2 und 3 Bestandteil eines Getriebegehäuses oder dergleichen. Zwischen den Bauteilen 2 und 3 ist eine Flachdichtung 6 vorgesehen, welche jeweils flächig an den Dichtflächen 4 und 5 anliegt. Entsprechend sind die Bauteile 2 und 3 dicht aneinander befestigt.

Neben den Bauteilen 2 und 3 ist ein drittes Bauteil 7 vorgesehen, welches insbesondere in Form einer Leitung beziehungsweise Rohrleitung vorliegt. Ein Grundkörper 8 des dritten Bauteils 7 ist insoweit ein Rohr. Das dritte Bauteil 7 durchgreift das erste Bauteil 2 sowie eine Durchgangsöffnung 9 der Flachdichtung 6. In dem hier dargestellten Ausführungsbeispiel ragt es bis in das zweite Bauteil 3, insbesondere bis in eine Aufnahmeöffnung 10 hinein. Dabei liegt das dritte Bauteil 7, insbesondere ein Dichtstopfen 11 des dritten Bauteils 7, dichtend an einer Innenumfangsfläche 12 der Aufnahmeöffnung 10 an. Zu diesem Zweck ist bevorzugt eine Dichtung 13 vorgesehen, welche beispielsweise in Form eines O-Rings vorliegt, der in einer hier nicht gekennzeichneten Ausnehmung des Dichtstopfens 11 einliegt.

Es wird deutlich, dass das dritte Bauteil 7, nämlich hier der Dichtstopfen 11, eine Haltekerbe 14 aufweist, in die ein Bereich der Flachdichtung 6 eingreift. Dieser Bereich ist ein Teil des Rands der Durchgangsöffnung 9, welcher insoweit als Halterand 15 bezeichnet wird. Bedingt durch das Eingreifen des Halterands 15 in die Haltekerbe 14 ist das dritte Bauteil 7 zumindest in axialer Richtung - bezüglich seiner Längsmittelachse 16 - festgesetzt. Dies ist jedoch lediglich in einer Haltestellung der Flachdichtung 6 der Fall. In einer Freigabestellung der Flachdichtung 6 dagegen ist das dritte Bauteil 7 freigegeben, sodass es beispielsweise auch aus den Bauteilen 2 und 3, insbesondere aus der Aufnahmeöffnung 10, herausgenommen werden kann.

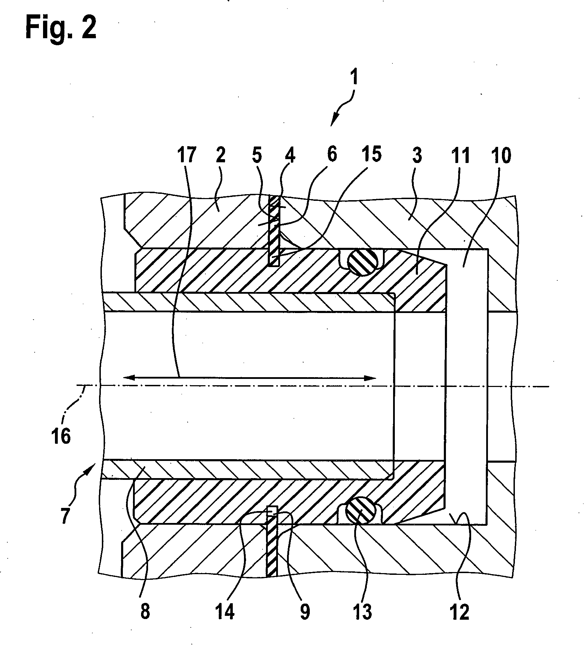

Die Figur 2 zeigt eine Detailansicht eines Bereichs der Dichtungsanordnung 1. Es wird nochmals deutlich, dass der Halterand 15 und insoweit ein Bereich der Flachdichtung 6 in die Haltekerbe 14 des dritten Bauteils 7 eingreift, sodass letzteres in axialer Richtung bezüglich der Längsmittelachse 16 bezüglich den Bauteilen 2 und 3 gehalten ist, weil die Flachdichtung 6 klemmend zwischen diesen angeordnet ist. Eine Verlagerung des dritten Bauteils 7 in Richtung des Doppelpfeils 17 ist mithin nicht mehr möglich. Der Dichtstopfen 11 ist bevorzugt kraftschlüssig und/oder stoffschlüssig an dem Grundkörper 8 befestigt, sodass letzterer nicht ohne weiteres aus dem Dichtstopfen 11 herausgelangen kann.

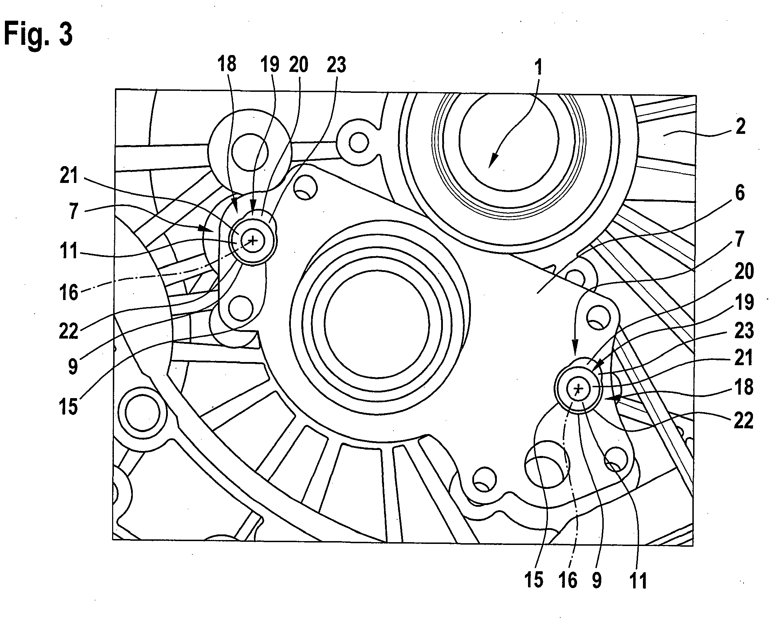

Die Figur 3 zeigt einen Bereich der Dichtungsanordnung 1 nach einem ersten Montageschritt. Dabei ist die Flachdichtung 6 auf die hier nicht zu erkennende erste Dichtfläche 4 des ersten Bauteils 2 aufgelegt. Zudem ist das dritte Bauteil 7, welches den Grundkörper 8, den Dichtstopfen 11 und die Dichtung 13 aufweist, bereits in der Durchgangsöffnung 9 angeordnet. Die Flachdichtung 6 liegt dabei in ihrer Freigabestellung vor, sodass das dritte Bauteil 7 ohne weiteres in axialer Richtung bezüglich der Längsmittelachse 16 verlagerbar ist. In dem vorliegenden Ausführungsbeispiele sind zwei Bauteile 7 vorgesehen.

Weiterhin wird deutlich, dass Befestigungsmittel 18 vorgesehen sind. Diese dienen insbesondere dem Festsetzen des dritten Bauteils 7 bezüglich der Flachdichtung 6. Zusätzlich oder alternativ können die Befestigungsmittel 18 auch dazu dienen, die Flachdichtung 6 an dem ersten Bauteil 2 zu befestigen. Die Befestigungsmittel 18 können, wie hier dargestellt, wenigstens bereichsweise von dem dritten Bauteil 7 gebildet sein. Alternativ können sie jedoch auch separat von diesem ausgestaltet sein. Die Befestigungsmittel 18 bestehen beispielsweise aus einem Haltevorsprung 19 und einer Halteaufnahme 20, wobei ersterer an dem ersten Bauteil 2 und letzterer in der Flachdichtung 6 vorliegt. Der Haltevorsprung 19 weist dabei bevorzugt einen Haltekopf 21 und einen hier nicht erkennbaren Haltekörper auf. Vorzugsweise sind mehrere dieser Befestigungsmittel 18 vorgesehen, um eine zuverlässige Befestigung der Flachdichtung 6, insbesondere an dem dritten Bauteil 7 und/oder an dem ersten Bauteil 2, zu erzielen. Die Halteaufnahme 20 besteht aus einem durchmessergrößeren Bereich 22 und einem durchmesserkleineren Bereich 23. Die Durchmesser der Bereiche 22 und 23 sind derart ausgelegt, dass in der hier dargestellten Freigabestellung der Haltekopf 21 durch den Bereich 22 in die Halteaufnahme 20 eingebracht werden kann.

In der hier dargestellten Ausführungsform wird der Haltevorsprung 19 vorzugsweise von dem dritten Bauteil 7 ausgebildet, während die Halteaufnahme 20 beispielsweise der Durchgangsöffnung 9 entspricht.

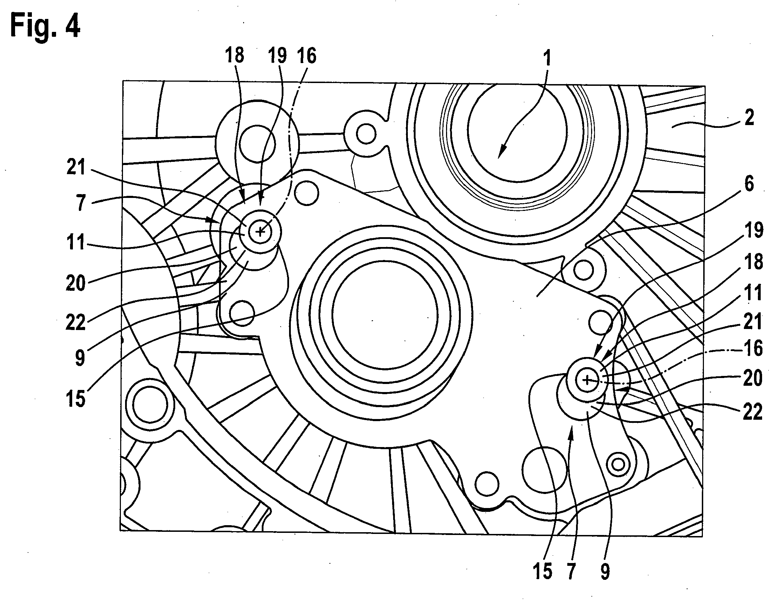

Nachfolgend wird die Flachdichtung 6 in Richtung ihrer Haltestellung verlagert. Diese ist in der Figur 4 dargestellt, welche ebenfalls die bereits bekannte Detaildarstellung der Dichtungsanordnung 1 zeigt. Es wird deutlich, dass nun zum einen der Haltevorsprung 19 in dem Bereich 23 der Halteaufnahme 20 vorliegt, welcher einen kleineren Durchmesser aufweist als der Haltekopf 21. Entsprechend ist die Flachdichtung 6 bezüglich des dritten Bauteils 7 und/oder des ersten Bauteils 2 zumindest in axialer Richtung bezüglich der Längsmittelachse 16 festgesetzt. Weil in der Haltestellung zudem der Halterand 15 in die Haltekerbe 14 eingreift, ist bei einem Festsetzen der Flachdichtung 6 bezüglich des ersten Bauteils 2 auch das dritte Bauteil 7 bezüglich des ersten Bauteils 2 festgelegt. Entsprechend wird mit der hier gezeigten Ausgestaltung der Flachdichtung 6 eine einfache und rasche Montage der Dichtungsanordnung 1 ermöglicht.

Nach dem Verbringen der Flachrichtung 6 in die Haltestellung muss nunmehr lediglich das zweite Bauteil 3 an dem ersten Bauteil 2 derart befestigt werden, dass die Flachrichtung 6 zwischen den Dichtflächen 4 und 5 aufgenommen ist und dichtend an diesen anliegt. Bevorzugt wird dabei das zweite Bauteil 3 derart an dem ersten Bauteil 2 befestigt, dass die Flachdichtung 6 klemmend zwischen ihnen gehalten ist. Zusätzlich kann auch ein formschlüssiges Halten vorgesehen sein, beispielsweise mittels eines weiteren Haltevorsprungs 19, der von dem zweiten Bauteil 3 ausgeht und nach dem Befestigen der Bauteile 2 und 3 aneinander ein Verlagern der Flachdichtung 6 aus der Haltestellung heraus nicht mehr zulässt. Weil die Flachdichtung 6 also in der Haltestellung festgelegt ist, ist das dritte Bauteil 7 sicher bezüglich der Bauteile 2 und 3 gehalten.

### BEZUGSZEICHENLISTE

- 1: Dichtungsanordnung
- 2: 1. Bauteil
- 3: 2. Bauteil
- 4: 1. Dichtfläche
- 5: 2. Dichtfläche
- 6: Flachdichtung.
- 7: 3. Bauteil
- 8: Grundkörper
- 9: Durchgangsöffnung
- 10: Aufnahmeöffnung
- 11: Dichtstopfen
- 12: Innenumfangsfläche
- 13: Dichtung
- 14: Haltekerbe
- 15: Halterand
- 16: Längsmittelachse
- 17: Doppelpfeil
- 18: Befestigungsmittel
- 19: Haltevorsprung
- 20: Halteaufnahme
- 21: Haltekopf
- 22: Bereich
- 23: Bereich

## Patentansprüche

1. Dichtungsanordnung (1) mit einem eine erste Dichtfläche (4) aufweisenden ersten Bauteil (2), einem eine zweite Dichtfläche (5) aufweisenden zweiten Bauteil (3) sowie einer flächig zwischen der ersten Dichtfläche (4) und der zweiten Dichtfläche (5) angeordneten Flachdichtung (6), die über eine Durchgangsöffnung (9) für ein in dem ersten Bauteil (2) und/oder dem zweiten Bauteil (3) wenigstens bereichsweise angeordnetes, in die Durchgangsöffnung (9) zumindest eingreifendes drittes Bauteil (7) verfügt, **dadurch gekennzeichnet, dass** die Flachdichtung (6) Haltemittel zur Befestigung des dritten Bauteils (7) aufweist, wobei die Haltemittel in einer Freigabestellung der Flachdichtung (6) das dritte Bauteil (7) freigeben und in einer Haltestellung bezüglich des ersten Bauteils (2) und/oder des zweiten Bauteils (3) zumindest in einer Richtung festsetzen, wobei die Flachdichtung (6) durch Verschieben auf der ersten Dichtfläche (4) oder der zweiten Dichtfläche (5) aus der Freigabestellung in die Haltestellung bringbar ist, und wobei Befestigungsmittel (18) zur Befestigung der Flachdichtung (6) an dem ersten Bauteil (2) und/oder dem zweiten Bauteil (3) vorgesehen sind, wobei die Flachdichtung (6) in der Freigabestellung bezüglich des ersten Bauteils (2) und/oder des zweiten Bauteils (3) in der zumindest einen Richtung verlagerbar und in der Haltestellung festgelegt ist.

2. Dichtungsanordnung nach Anspruch 1, **dadurch gekennzeichnet, dass** an dem ersten Bauteil (2), dem zweiten Bauteil (3) oder dem dritten Bauteil (7) ein Dichtelement, insbesondere ein Dichtstopfen (11), vorgesehen ist, der in eine Aufnahmeöffnung (10) des ersten Bauteils (2) und/oder des zweiten Bauteils (3) hineinragt und dichtend an einer Innenumfangsfläche (12) der Aufnahmeöffnung (10) anliegt.

3. Dichtungsanordnung nach einem der vorhergehenden Ansprüche, **dadurch gekennzeichnet, dass** das dritte Bauteil (7), insbesondere das Dichtelement eine Haltekerbe (14) aufweist, in welche die Haltemittel in der Haltestellung derart eingreifen, dass das dritte Bauteil (7) festgesetzt ist.

4. Dichtungsanordnung nach einem der vorhergehenden Ansprüche, **dadurch gekennzeichnet, dass** die Haltemittel als Halterand (15) die Durchgangsöffnung (9) wenigstens teilweise begrenzen.

5. Dichtungsanordnung nach einem der vorhergehenden Ansprüche, **dadurch gekennzeichnet, dass** die Durchgangsöffnung (9) randgeschlossen ausgestaltet ist.

6. Dichtungsanordnung nach einem der vorhergehenden Ansprüche, **dadurch gekennzeichnet, dass** die Befestigungsmittel (18) wenigstens einen Haltevorsprung (19) und eine mit dem Haltevorsprung (19) in der Haltestellung zum Festlegen der Flachdichtung (6) zusammenwirkende Halteaufnahme (20) aufweisen.

7. Dichtungsanordnung nach einem der vorhergehenden Ansprüche, **dadurch gekennzeichnet, dass** der Haltevorsprung (19) an dem ersten Bauteil (2) oder dem zweiten Bauteil (3) und die Halteaufnahme (20) an der Flachdichtung (6) vorliegt.

8. Verfahren zur Montage einer Dichtungsanordnung (1), insbesondere nach einem oder mehreren der Ansprüche 1 bis 7, wobei die Dichtungsanordnung (1) ein eine erste Dichtfläche (4) aufweisendes erstes Bauteil (2), ein eine zweite Dichtfläche (5) aufweisendes zweites Bauteil (3) sowie eine flächig zwischen der ersten Dichtfläche (4) und der zweiten Dichtfläche (5) angeordnete Flachdichtung (6) aufweist, die über eine Durchgangsöffnung (9) für ein in dem ersten Bauteil (2) und/oder dem zweiten Bauteil (3) wenigstens bereichsweise angeordnetes, in die Durchgangsöffnung (9) zumindest eingreifendes drittes Bauteil (7) verfügt, **dadurch gekennzeichnet, dass** die Flachdichtung (6) während der Montage von einer Freigabestellung in eine Haltestellung verlagert wird und die Flachdichtung (6) Haltemittel zur Befestigung des dritten Bauteils (7) aufweist, wobei die Haltemittel in der Freigabestellung das dritte Bauteil (7) freigeben und in der Haltestellung bezüglich des ersten Bauteils (2) und/oder des zweiten Bauteils (3) zumindest in einer Richtung festsetzen, wobei die Flachdichtung (6) durch Verschieben auf der ersten Dichtfläche (4) oder der zweiten Dichtfläche (5) aus der Freigabestellung in die Haltestellung gebracht wird, und wobei Befestigungsmittel (18) zur Befestigung der Flachdichtung (6) an dem ersten Bauteil (2) und/oder dem zweiten Bauteil (3) vorgesehen sind, wobei die Flachdichtung (6) in der Freigabestellung bezüglich des ersten Bauteils (2) und/oder des zweiten Bauteils (3) in der zumindest einen Richtung verlagerbar und in der Haltestellung festgelegt ist.

## Claims

1. Sealing assembly (1) with a first component (2) having a first sealing surface (4), a second component (3) having a second sealing surface (5) and a flat gasket (6) arranged flat between the first sealing surface (4) and the second sealing surface (5) and having a through opening (9) for a third component (7) at least portions of which are arranged in the first component (2) and/or the second component (3) and which at least engages in the through-opening (9), **characterized in that** the flat gasket (6) comprises retaining means for fastening the third component (7), wherein in a release position of the flat gasket (6) the retaining means release the third component (7) and in a retaining position the retaining means fix the third component relative to the first component (2) and/or the second component (3) in at least one direction, wherein the flat gasket (6) is movable from the release position into the retaining position by shifting on the first sealing surface (4) or the second sealing surface (5), and wherein fastening means (18) are provided for fastening the flat gasket (6) on the first component (2) and/or the second component (3), wherein in the release position the flat gasket (6) is displaceable relative to the first component (2) and/or the second component (3) in the at least one direction and is fixed in the retaining position.

2. Sealing assembly according to claim 1, **characterized in that** a sealing element, in particular a sealing plug (11), is provided on the first component (2), the second component (3) or the third component (7), said sealing plug protruding into a receiving opening (10) of the first component (2) and/or the second component (3) and sealingly resting against an inner circumference surface (12) of the receiving opening (10).

3. Sealing assembly according to any of the preceding claims, **characterized in that** the third component (7), in particular the sealing element, comprises a retaining notch (14) into which the retaining means engage in the retaining position so that the third component (7) is fixed.

4. Sealing assembly according to any of the preceding claims, **characterized in that** the retaining means in the form of a retaining rim (15) at least partially border the through-opening (9).

5. Sealing assembly according to any of the preceding claims, **characterized in that** the through-opening (9) has a closed rim.

6. Sealing assembly according to any of the preceding claims, **characterized in that** the fastening means (18) have at least one retaining protrusion (19) and a retaining receptacle (20), which in the retaining position interacts with the retaining protrusion (19) for fixing the flat gasket (6).

7. Sealing assembly according to any of the preceding claims, **characterized in that** the retaining protrusion (19) is present on the first component (2) or the second component (3) and the retaining receptacle (20) is present on the flat gasket (6).

8. Method for assembling a sealing assembly (1), in particular according to one or more of claims 1 to 7, wherein the sealing assembly (1) comprises a first component (2) having a first sealing surface (4), a second component (3) having a second sealing surface (5), and a flat gasket (6) arranged flat between the first sealing surface (4) and the second sealing surface (5) and having a through opening (9) for a third component (7) at least portions of which are arranged in the first component (2) and/or the second component (3) and which at least engages in the through-opening (9), **characterized in that** the flat gasket (6) is displaced from a release position into a retaining position during assembly and the flat gasket (6) comprises retaining means for fastening the third component (7), wherein in the release position the retaining means release the third component (7) and in the retaining position the retaining means fix the third component relative to the first component (2) and/or the second component (3) in at least one direction, wherein the flat gasket (6) is displaced from the release position into the retaining position by shifting on the first sealing surface (4) or the second sealing surface (5), and wherein fastening means (18) are provided for fastening the flat gasket (6) on the first component (2) and/or the second component (3), wherein in the release position the flat gasket (6) is displaceable relative to the first component (2) and/or the second component (3) in the at least one direction and is fixed in the retaining position.

## Revendications

1. Système d'étanchéité (1) avec un premier composant (2) présentant une première surface d'étanchéité (4), un deuxième composant (3) présentant une deuxième surface d'étanchéité (5) ainsi qu'un joint d'étanchéité plat (6) agencé à plat entre la première surface d'étanchéité (4) et la deuxième surface d'étanchéité (5), qui dispose d'une ouverture de passage (9) pour un troisième composant (7) au moins en prise dans l'ouverture de passage (9), agencé au moins par zone dans le premier composant (2) et/ou le deuxième composant (3), **caractérisé en ce que** le joint d'étanchéité plat (6) présente des moyens de retenue pour la fixation du troisième composant (7), dans lequel les moyens de retenue libèrent le troisième composant (7) dans une position de libération du joint d'étanchéité plat (6) et le fixent dans une position de retenue par rapport au premier composant (2) et/ou au deuxième composant (3) au moins dans une direction, dans lequel le joint d'étanchéité plat (6) peut être amené de la position de libération à la position de retenue par déplacement sur la première surface d'étanchéité (4) ou la deuxième surface d'étanchéité (5), et dans lequel des moyens de fixation (18) pour la fixation du joint d'étanchéité plat (6) sont prévus au niveau du premier composant (2) et/ou du deuxième composant (3), dans lequel le joint d'étanchéité plat (6) est déplaçable dans la position de libération par rapport au premier composant (2) et/ou au deuxième composant (3) dans l'au moins une direction et fixé dans la position de retenue.

2. Système d'étanchéité selon la revendication 1, **caractérisé en ce qu'**au niveau du premier composant (2), du deuxième composant (3) ou du troisième composant (7), un élément d'étanchéité, en particulier un bouchon d'étanchéité (11), est prévu, qui pénètre dans une ouverture de logement (10) du premier composant (2) et/ou du deuxième composant (3) et s'appuie de manière étanche contre une surface périphérique intérieure (12) de l'ouverture de logement (10).

3. Système d'étanchéité selon l'une quelconque des revendications précédentes, **caractérisé en ce que** le troisième composant (7), en particulier l'élément d'étanchéité présente une entaille de retenue (14), dans laquelle les moyens de retenue entrent en prise dans la position de retenue de telle sorte que le troisième composant (7) est fixé.

4. Système d'étanchéité selon l'une quelconque des revendications précédentes, **caractérisé en ce que** les moyens de retenue en tant que bord de retenue (15) limitent au moins en partie l'ouverture de passage (9).

5. Système d'étanchéité selon l'une quelconque des revendications précédentes, **caractérisé en ce que** l'ouverture de passage (9) est réalisée fermée sur les bords.

6. Système d'étanchéité selon l'une quelconque des revendications précédentes, **caractérisé en ce que** les moyens de fixation (18) présentent au moins une saillie de retenue (19) et un logement de retenue (20) coopérant avec la saillie de retenue (19) dans la position de retenue pour la fixation du joint d'étanchéité plat (6).

7. Système d'étanchéité selon l'une quelconque des revendications précédentes, **caractérisé en ce que** la saillie de retenue (19) est présente au niveau du premier composant (2) ou du deuxième composant (3) et le logement de retenue (20) est présent au niveau du joint d'étanchéité plat (6).

8. Procédé de montage d'un système d'étanchéité (1), en particulier selon une ou plusieurs des revendications 1 à 7, dans lequel le système d'étanchéité (1) présente un premier composant (2) présentant une première surface d'étanchéité (4), un deuxième composant (3) présentant une deuxième surface d'étanchéité (5) ainsi qu'un joint d'étanchéité plat (6) agencé à plat entre la première surface d'étanchéité (4) et la deuxième surface d'étanchéité (5), qui dispose d'une ouverture de passage (9) pour un troisième composant (7) au moins en prise dans l'ouverture de passage (9), agencé au moins par zone dans le premier composant (2) et/ou le deuxième composant (3), **caractérisé en ce que** le joint d'étanchéité plat (6) est déplacé pendant le montage d'une position de libération à une position de retenue et le joint d'étanchéité plat (6) présente des moyens de retenue pour la fixation du troisième composant (7), dans lequel les moyens de retenue libèrent le troisième composant (7) dans la position de libération et le fixent dans la position de retenue par rapport au premier composant (2) et/ou au deuxième composant (3) au moins dans une direction, dans lequel le joint d'étanchéité plat (6) est amené de la position de libération à la position de retenue par déplacement sur la première surface d'étanchéité (4) ou la deuxième surface d'étanchéité (5), et dans lequel des moyens de fixation (18) pour la fixation du joint d'étanchéité plat (6) sont prévus au niveau du premier composant (2) et/ou du deuxième composant (3), dans lequel le joint d'étanchéité plat (6) est déplaçable dans la position de libération par rapport au premier composant (2) et/ou au deuxième composant (3) dans l'au moins une direction et fixé dans la position de retenue.
